# EUROPÄISCHE PATENTSCHRIFT

(11) **EP 0 386 516 B1**
(45) Veröffentlichungstag und Bekanntmachung des Hinweises auf die Patenterteilung: **26.05.1993**
(21) Anmeldenummer: 90103215.1
(22) Anmeldetag: 20.02.1990
(51) Int. Cl.: F16L 47/06, F16L 21/02, F16L 49/02

(54) **Dichtring**
Sealing ring
Bague d'étanchéité

(30) Priorität: 04.03.1989 DE 3906967
(43) Veröffentlichungstag der Anmeldung: 12.09.1990
(73) Patentinhaber: Friatec Aktiengesellschaft Keramik- und Kunststoffwerke, D-68229 Mannheim (DE)
(72) Erfinder: Lorenz, Hans-Joachim, Dipl.-Ing., D-6949 Gorxheimertal (DE)
(74) Vertreter: Klose, Hans, Dipl.-Phys.

(56) Entgegenhaltungen:
- DE-A- 2 010 826
- DE-A- 2 363 177
- DE-A- 3 545 370
- GB-A- 2 051 994
- US-A- 2 271 777
- US-A- 3 829 107
- US-A- 4 426 095
- US-A- 4 664 421

## Beschreibung

Die Erfindung bezieht sich auf einen Dichtring gemäß den im Oberbegriff des Patentanspruchs 1 angegebenen Merkmalen.

Aus DE-U-17 82 489 ist ein derartiger Dichtring bekannt, welcher drei Dichtlippen aufweist. Diese Dichtlippen weisen im wesentlichen jeweils den gleichen Durchmesser auf und liegen an der Außenfläche eines eingeschobenen Spitzendes gleichmäßig an. Die der Muffenstirn zugekehrte Seite des aus Gummi bestehenden Dichtringes ist als ein Hartteil ausgebildet und besteht aus einem Gummi größerer Härte. Die Herstellung eines derartigen Dichtringes aus zwei Werkstoffen unterschiedlicher Härte erfordert einen nicht unerheblichen Aufwand. Darüber hinaus ergeben sich bei dem vorbekannten Dichtring Schwierigkeiten, wenn ein mit Schmutz behaftetes Spitzende in die Muffe eingeschoben wird. Es ist nämlich unter praxisbezogenen Einsatzbedingungen kaum zu vermeiden, daß beispielsweise aufgrund nachlässiger Lagerung die Spitzenden mit Sand oder Schmutz in Berührung kommen, so daß bei der Montage die Dichtlippen beschädigt bzw. an einer ordnungsgemäßen Anlage am Spitzende gehindert werden. Unter Zugrundelegung eines maximal zulässigen Einschubwiderstandes für das Spitzende müssen sämtliche drei Dichtlippen des Dichtringes jeweils einen vergleichsweise großen Innendurchmesser aufweisen, zumal die stirnseitige Dichtlippe eine vergleichsweise hohe Härte aufweisen soll. Es können daher relativ leicht Schmutzablagerungen, wie Sand oder kleine Steinchen, die Dichtlippen beschädigen oder sich zwischen die Dichtlippen und die Außenfläche des Spitzendes setzen und damit die Dichtwirkung infrage stellen. Abgesehen von der stirnseitigen Dichtlippe besteht der vorbekannte Dichtring aus verhältnismäßig weichem Gummi, wodurch sich weitere Schwierigkeiten bei größeren Spaltbreiten, insbesondere im Hinblick auf Fertigungstoleranzen von Muffe und Spitzende sich ergeben.

Aus der DE-C-33 38 899 ist ein Dichtring bekannt, welcher in eine Muffe eines Rohres oder eines Fittings eingesetzt wird und zur Abdichtung bezüglich des in die Muffe einzuführenden Spitzendes eines Rohres dient. Der Dichtring besteht aus einem Elastomer und wird in einer Sicke der Muffe angeordnet. Die Abmessungen der Rohre, der Muffen sowie der Sicken sind in den Normen DIN 19560 sowie DIN 19561 für unterschiedliche Durchmesser festgelegt. Der bekannte Dichtring weist radial innen eine Dichtlippe auf, welche an der Außenfläche des eingeschobenen Spitzendes anliegt. Radial außen weist der bekannte Dichtring eine Umfangsrinne auf, welche eine Luftpolsterung ermöglicht. Die Umfangsrinne liegt axial zwischen zwei Stützrippen, welche eine vergleichsweise große radiale Steifigkeit ergeben. Um einen niedrigen Einschubwiderstand zu erhalten, sind die Stützrippen, die Umfangsrinne sowie die Dichtlippe, und zwar insbesondere die Flächen der Dichtlippe in geeigneter Weise aufeinander abgestimmt.

Ferner ist aus der DE-A-35 45 370 ein profilierter Dichtring mit einer zentralen Dichtlippe bekannt. Dieser Dichtring ist jedoch nicht symetrisch ausgebildet und es besteht die Gefahr von Montagefehlern. Der Dichtring enthält im Bereich der Außenfläche umlaufende Randleisten, zwischen welchen in Umfangsrichtung beabstandet Vertiefungen angeordnet sind. Zur Herstellung dieser Vertiefungen sind recht aufwendige Werkzeuge erforderlich. Aufgrund der Vertiefungen ist in Umfangsrichtung betrachtet der Anpreßdruck keinesfalls gleichförmig. Vielmehr muß im Bereich der Vertiefungen mit einem verringerten radialen Anpreßdruck gerechnet werden, und zwar im Vergleich zu den Bereichen eines vollen Querschnittes. Da die Dichtwirkung des Dichtringes von den Bereichen des verringerten Anpreßdruckes bestimmt wird, wird er hinsichtlich der Dichtwirkung für diese Bereiche ausgelegt. Die Bereiche mit vollem Querschnitt führen zu einem erhöhten Einschubwiderstand, ohne die Dichtwirkung des Dichtringes zu verbessern.

Aus der DE-C-11 55 292 ist ein Dichtring mit drei Dichtlippen mit gleichen Durchmessern bekannt. Die Dichtlippen sind nach Art von Sägezähnen ausgebildet, so daß eine definierte Orientierung innerhalb der Sicke erforderlich ist und somit die bereits erwähnten Montagefehler eintreten können. Die Außenfläche des Dichtringes ist entsprechend der Sickenform konisch ausgebildet, wobei die radiale Höhe der Dichtlippen wesentlich größer ist als die Materialdicke zur Außenfläche hin. Aufgrund der übereinstimmenden Ausbildung der drei Dichtlippen führt auch dieser Dichtring zu einem vergleichsweise großen Einschubwiderstand. In der Praxis ergeben sich immer wieder Probleme dadurch, daß nach dem Abschneiden des einzuführenden Rohres auf die erforderliche Länge die Fase nicht ordnungsgemäß am vorderen Ende des einzuführenden Spitzendes angebracht wird. Dies kann zu Beschädigungen des Dichtringes führen und die Dichtfunktion insgesamt infrage stellen. Eine weitere Schwierigkeit kann dadurch auftreten, daß der Dichtring vor der Montage beim Transport aus der Sicke herausfällt, so daß gegebenenfalls zusätzliche Maßnahmen getroffen werden müssen, um dies unter allen Umständen zu verhindern.

Der Erfindung liegt daher die Aufgabe zugrunde, einen Dichtring der eingangs genannten Art dahingehend weiterzubilden, daß möglichst geringe Einschubkräfte bei der Montage, also beim Einführen des Spitzendes eines Rohres oder Formstückes, auftreten. Der Dichtring soll in der Weise ausgebildet sein, daß ein Spitzende auch dann funktionssicher montiert und abgedichtet wird, wenn die Fase nicht oder nicht ordnungsgemäß angebracht ist. Ferner soll eine zuverlässige Montage auch dann gewährleistet werden können, wenn die Stirnfläche des einzuführenden Spitzendes nicht exakt senkrecht zur Längsachse steht, also beispielsweise beim Abschneiden des Rohrendes die Schnittebene in einem Winkel zur Längsachse lag. Ferner soll der Dichtring in einfacher Weise in die Sicke montiert werden können und bedarfsweise, beispielsweise im Reparaturfalle, gegen einen anderen Dichtring ausgetauscht werden können. Darüber hinaus soll aber auch gewährleistet werden, daß der Dichtring zuverlässig in der Sicke gehaltert wird, damit insbesondere beim Transport das Herausfallen mit hoher Zuverlässigkeit vermieden werden kann. Andererseits soll aber gewährleistet werden, daß keine zusätzlichen Maßnahmen zur Sicherung in der Sicke erforderlich werden.

Diese Aufgabe wird gemäß den im Kennzeichen des Patentanspruchs 1 angegebenen Merkmalen gelöst.

Der erfindungsgemäß ausgebildete Dichtring zeichnet sich durch eine hohe Funktionssicherheit aus und gewährleistet aufgrund der Lippengestaltung eine leichte Montierbarkeit und eine sichere Abdichtung. Gegebenenfalls kann die hergestellte Verbindung zwischen dem Spitzende und der Muffe leicht demontiert werden. Durch die Kombination der zentralen Dichtlippe mit in beiden axialen Richtungen über eine Ausnehmung sich anschließenden zusätzlichen Abstreiflippen wird eine gute Dichtwirkung bei geringen Einschubkräften auch dann gewährleistet, wenn das Spitzende nicht in der erforderlichen Weise mit einer Fase versehen ist. Die zentrale Dichtlippe weist einen geringeren Innendurchmesser auf als die beiden zusätzlichen Abstreiflippen, die zum Abstreifen von Verunreinigungen oder Schmutz an der Außenfläche des Spitzendes dienen. Die zwischen den genannten drei Lippen vorhandenen beiden ringförmigen Zwischenräume ermöglichen zumindest teilweise die Aufnahme der in Einschubrichtung vorderen Dichtlippe beim Einführen eines Spitzendes, so daß eine Beschädigung oder gar ein Abquetschen zuverlässig vermieden wird. Ferner kann sich in besonders zweckmäßiger Weise in den Zwischenräumen ein rinförmiges Luftpolster ausbilden, welches sehr vorteilhaft für die Dichtwirkung ist. Der Dichtring ist symmetrisch bezüglich der Mittelebene ausgebildet, welche durch die zentrale Dichtlippe verläuft und im wesentlichen orthogonal zur Längsachse der Muffe steht. Zweckmäßig sind auch die der zentralen Lippe zugewandten Innenflächen der beiden Abstreiflippen im wesentlichen parallel zur Mittelebene angeordnet und liegen somit gleichfalls in Radialebenen bezüglich der Längsachse der Muffe.

Der im Vergleich zu den beiden zusätzlichen axial beabstandet angeordneten Lippen kleinere Innendurchmesser der zentralen Dichtlippe ergibt eine hohe Ringsteifigkeit, was besonders vorteilhaft im Hinblick auf die Gefahr des Herausfallens vor der Montage ist. Die zentrale Dichtlippe weist zusammen mit dem in der Sicke befindlichen Teil des Dichtringes einen im Prinzip T-förmigen Querschnitt auf. Infolge dieses Querschnittes wird ein hohes Widerstandsmoment erreicht, das in vorteilhafter Weise dem Herauslösen des Dichtringes aus der Sicke, beispielsweise beim Herunterfallen der Muffe, entgegenwirkt. Die radial nach innen gerichtete Dichtlippe bildet den im Hinblick auf das Widerstandsmoment wichtigen zentralen Steg des T-Querschnittes, wobei der in der Sicke liegende Teil des Dichtringes den "Querbalken" bildet. Eine weitere Vergrößerung des Widerstandmoments wird durch die beiden zusätzlichen Lippen bewirkt, welche gleichfalls in radialer Richtung nach innen ausgerichtet sind. Die zentrale Dichtlippe ist radial nach innen gerichtet und weist einen Querschnitt entsprechend einem gleichschenkligen Dreieck auf. Die Basisbreite der Dichtlippe ist im wesentlichen gleich groß wie die radiale Höhe der zusätzlichen Lippen. Auch diese zusätzlichen Lippen sind im wesentlichen dreieckförmig ausgebildet, wobei jeweils die der zentralen Dichtlippe zugekehrte Seitenfläche im wesentlichen in einer Radialebene liegt. Die Basisbreite dieser zusätzlichen Lippen ist jeweils im wesentlichen gleich groß wie die Basisbreite der zentralen Dichtlippe und/oder wie ihre radiale Höhe. Die Kombination der zentralen Dichtlippe mit den seitlich beabstandet angeordneten Lippen ergibt insgesamt ein hohes Widerstandsmoment, das in zweckmäßiger Weise dem unbeabsichtigten Herauslösen des Dichtringes aus der Sicke entgegenwirkt. Zusätzliche Mittel oder gar ein zusätzlicher Ring zur Aussteifung der gegebenenfalls auch hinderlich für die Montage sein kann, werden aufgrund der erfindungsgemäßen Ausbildung des Dichtringes nicht benötigt. Des weiteren ist der Dichtring symmetrisch ausgebildet, so daß ein fehlerhaftes Einsetzen in die Sicke nicht zu befürchten ist.

Weitere zweckmäßige Ausgestaltungen sowie Weiterbildungen der Erfindung ergeben sich aus den Unteransprüchen sowie der nachfolgenden Beschreibung eines besonderen Ausführungsbeispiels.

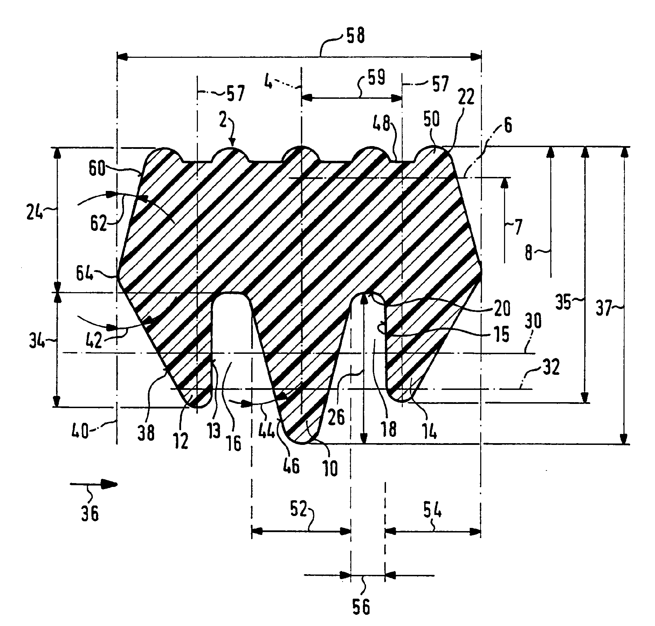

In der Zeichnung ist der Dichtring 2, der aus einem Elastomer besteht, in einer axialen Schnittebene geschnitten dargestellt, wobei aus Gründen der Übersichtlichkeit umlaufende Linien nicht gezeichnet sind. Der Dichtring 2 ist symmetrisch bezüglich einer Mittel- oder Symmetrieebene 4 ausgebildet, die senkrecht zur Längsachse der Muffe bzw. der Sicke steht, in welche der Dichtring 2 eingesetzt wird. Die Innenfläche der Sicke 6 ist durch eine strichpunktierte Linie angedeutet. Der Innendurchmesser 7 der Sicke 6 ist entspechend den eingangs genannten Normen für die jeweilige Rohr-Nennweite vorgegeben. Der Außendurchmesser 8 des Dichtringes 2 ist um einen vorgegebenen Betrag größer als der Durchmesser 7 der Sicke. Aufgrund der Differenz des Innendurchmessers 7 und des Außendurchmessers 8 wird der Dichtring 2 erfindungsgemäß unter Vorspannung in der Sicke 6 festgelegt. Diese Differenz beträgt im Rahmen der Erfindung zwischen 1,5 - 3,5 %, zweckmäßig zwischen 2 und 3 % bezogen auf den Innendurchmesser der Sicke. Damit wird sichergestellt, daß einerseits der Dichtring 2 zuverlässig in der Sicke festgelegt ist und andererseits infolge einer zu hohen Vorspannung nicht aus der Sicke, beispielsweise beim Einwirken von äußeren Kräften, herausgelöst wird.

Der Dichtring weist in der Mitte seiner Längsausdehnung die zentrale Dichtlippe 10 auf, welche einen in etwa dreieckförmigen Querschnitt aufweist. Die zentrale Dichtlippe 10 liegt in der Symmetrieebene des Dichtringes. Zu beiden Seiten der zentralen Dichtlippe 10 ist in Richtung zu den axialen Endflächen des Dichtringes je eine zusätzliche Lippe 12, 14 angeordnet, die als Abstreiflippen ausgebildet sind. Die der Mittelebene 4 zugewandten Innenflächen 13, 15 verlaufen ebenso wie die Mittelebene 4 im wesentlichen in Radialebenen in bezug auf Längsachse der Muffe. Zwischen der Dichtlippe und der axial benachbarten Lippe ist je ein Zwischenraum 16, 18 vorhanden. Der Boden 20 des Zwischenraumes 16, 18 weist zur Außenfläche 22 einen Abstand 24 auf, der im wesentlichen gleich groß ist wie die von dem Boden 20 aus gemessene Höhe 26 der Dichtlippe 10. Mit der gestrichelten Linie 30 ist die unter Berücksichtigung der Toleranzen maximal mögliche Lage der Außenfläche des in die Muffe einzuführenden Spitzendes bzw. Rohres angegeben. Die zweite Linie 32 gibt hingegen die Lage der Rohraußenfläche beim Einhalten der minimalen Toleranzen an. Wesentlich ist nun, daß die bezüglich der genannten ersten Linie 30 radial nach innen liegende Querschnittsfläche der Lippe 12, 14 zumindest näherungsweise gleich groß ist wie der Teilbereich des Zwischenraumes 16, 18, welcher zwischen dem Boden 20 und der ersten Linie 30 liegt. Damit ist gewährleistet, daß beim Einführen des Rohrendes die Lippe 12, 14 in den benachbarten Zwischenraum hineingedrückt wird, ohne dabei beschädigt zu werden. Die radial innen liegenden Spitzen der Dichtlippe 10 sowie der zusätzlichen Lippen 12, 14 sind bevorzugt mit einem Radius versehen.

Die beiden äußeren Lippen 12, 14 weisen bezogen auf die Bodenfläche 20 eine Höhe 34 auf. Die Lippen 12, 14 dienen insbesondere zum Abstreifen von Schmutz beim Einschieben eines Spitzendes. Darüber hinaus ergibt sich auch eine zusätzliche Dichtfunktion. Die Linie 30, welche die maximale Toleranz der Rohraußenfläche angibt, liegt im Rahmen dieser Erfindung im wesentlichen auf der halben Höhe 34 der Lippe 12, 14. Es sei einmal davon ausgegangen, daß das Spitzende in Richtung des Pfeiles 36 in die Muffe eingeschoben wird, in deren Sicke der Dichtring 2 angeordnet ist. Selbst bei maximal möglichem Aussendurchmesser des Spitzendes wird aufgrund der vorgegebenen Ausbildung der Abstreiflippe 12, 14, und zwar insbesondere durch die Ausbildung der Höhe 34, sichergestellt, daß der bezüglich der Linie 30 radial innenliegende Teil der Lippe 12, 14 in den Zwischenraum 16 ausweichen kann. In diesen Zwischenraum können auch Fremdkörper, wie beispielsweise Sand oder kleinere Verunreinigungen, gelangen, welche dort abgelagert werden und nicht zur Dichtlippe gelangen. Ferner kann sich in dem Zwischenraum 16 ein für die Dichtwirkung günstiges Luftpolster ausbilden. Bei einem weiteren Einschieben des Spitzendes wird ferner die Dichtlippe 10 in Richtung des Pfeiles 36 verschoben. Der zur anderen Lippe 14 anschließende Zwischenraum 18 ermöglicht ein Ausweichen und Umlegen der Dichtlippe 10, welche teilweise zur Anlage an der genannten anderen Lippe 14 gelangt. Der Zwischenraum 18 wird teilweise vom Material der Dichtlippe 10 ausgefüllt, wobei aber ferner auch ein Teilbereich für das Luftpolster frei bleibt. Dieser freie Teilbereich des Zwischenraumes 18 bildet quasi eine geschlossene Kammer mit einem Luftpolster für die Dichtlippe 10.

Die innere Linie 32 des Toleranzfeldes verläuft, wie dargestellt, durch die Spitzen der Lippen 12, 14. Die Abstreiffunktion der Lippen 12, 14 kann also auch unter diesen Umständen gewährleistet werden. Damit wird unter allen Bedingungen sichergestellt, daß mittels den Abstreiflippen 12, 14 eventuell an dem einzuführenden Spitzende anhaftender Schmutz entfernt wird, bevor das Spitzende an die Dichtlippe gelangt. Der sich infolge der vorgeschalteten Abstreiflippe 12 ergebende Anteil des Einschubwiderstands ist wesentlich kleiner als der der Dichtlippe 10. Ursache hierfür ist zunächst die Tatsache, daß die Höhe 34 der Abstreiflippe 12, 14 wesentlich kleiner ist als die Höhe 26 der Dichtlippe 10. Die Höhe 34 ist um einen vorgegebenen Faktor kleiner als die Höhe 26 der Dichtlippe. Zweckmäßig liegt dieser Faktor im Bereich zwischen 0,7 und 0,8, bevorzugt bei 0,75. Die beiden Abstreiflippen 12, 14 weisen jeweils eine auf die Außenfläche 22 bezogene Gesamtdicke 35 auf und die entsprechende Gesamtdicke 37 der zentralen Dichtlippe 10 ist um einen vorgegebenen Faktor größer. Dieser Faktor liegt im Bereich zwischen 1,1 bis 1,3, zweckmäßig zwischen 1,15 bis 1,25, wobei sich ein Wert von 1,2 als besonders zweckmäßig erwiesen hat. Wesentlich ist ferner, daß die Vorderfläche 38 der Abstreiflippe 12, 14 bezüglich einer Radialebene 40 um einen Winkel 42 geneigt angeordnet ist, der größer ist als der entsprechende Winkel 44 zwischen der Vorderfläche 46 der Dichtlippe 10. Der durch die Abstreiflippe 12 bedingte Anteil des Einschubwiderstandes ist wesentlich geringer als der durch die Dichtlippe 10 verursachte. Als besonders zweckmäßig hat es sich erwiesen, den Winkel 42 zwischen der Vorderfläche 38 und der Radialebene 40 im Bereich zwischen 25° und 35°, zweckmäßig im wesentlichen 30° groß auszubilden. Der genannte Winkel 44 der Dichtlippe 10 liegt zweckmäßig im Bereich zwischen 10° und 20° und ist bevorzugt im wesentlichen 15° groß.

Der Dichtring 2 weist im Bereich seiner Außenfläche 22 radial nach innen gerichtete Ausnehmungen 48 auf, die sich als Umfangsrillen über den Umfang des Dichtrings erstrecken. Zwischen diesen Ausnehmungen 48 sind abgerundete vorstehende Teilbereiche oder Wulste 50 vorhanden. Aufgrund dieser Ausbildung wird ein Ausgleich bei eventuellen Unregelmäßigkeiten oder Fremdkörpern am Sickenboden erreicht und eine zu starke, örtliche Vorspannung des Ringes vermieden.

Die zentrale, radial nach innen gerichtete Dichtlippe 10 bildet zusammen mit dem in der Zeichnung oben dargestellten querliegenden Teil, der in der Sicke angeordnet ist, einen im wesentlichen T-förmigen Querschnitt, wobei in zweckmäßiger Weise ein hohes Widerstandsmoment erreicht wird. Die Basisbreite 52 der Dichtlippe 10, und zwar gemessen im Bereich der Bodenfläche 20 der Ausnehmungen 16, 18, ist im wesentlichen gleich groß wie die entsprechende Basisbreite 54 der Abstreiflippen 12, 14. Die Breite 56 der Ausnehmung 16, 18 ist im wesentlichen halb so groß wie die Basisbreite 52 bzw. 54. Aufgrund dieser Ausgestaltung wird einerseits bei reduziertem Materialeinsatz ein hohes Widerstandsmoment erreicht und andererseits wird ein kleiner Einschubwiderstand gewährleistet. Die Gesamtbreite 58 des Dichtringes 2 ist im wesentlichen viermal so groß wie die Basisbreite 52 und/oder die Basisbreite 54. Die Abstreiflippen 12, 14 weisen ebenso wie die zentrale Lippe 10 abgerundete Spitzen auf. Durch diese Spitzen verlaufen die Mittelebenen der zusätzlichen Lippen 12, 14, wobei diese Mittelebenen zur Symmetrieebene 4 jeweils den gleichen Abstand 59 aufweisen. Dieser Abstand 59 ist im wesentlichen gleich groß wie die Basisbreite 52 der Dichtlippe 10. Darüber hinaus beträgt der genannte Abstand 59 zweckmäßig im wesentlichen ein Viertel von der Gesamtbreite 58 des Dichtringes 2. Die Gesamtbreite 58 ist um einen vorgegebenen Faktor größer als die Gesamtdicke 37 der zentralen Dichtlippe. Dieser Faktor liegt im Bereich zwischen 1,1 bis 1,3 und zweckmäßig im Bereich zwischen 1,15 bis 1,25, wobei ein Faktor von im wesentlichen 1,2 sich als besonders zweckmäßig erwiesen hat.

An den axialen Enden des Dichtringes verläuft nicht nur die Vorderfläche 38 der zusätzlichen Lippe 12 in einem spitzen Winkel 42 geneigt zur Radialebene 40, sondern auch die der Sickenwand zugeordnete Stirnfläche 60 ist in einem Winkel 62 geneigt zur Radialebene 40 angeordnet. Die Vorderfläche 38 und die Stirnfläche 60 schließen am axialen Ende somit einen stumpfen Winkel ein und es ist eine quasi dachartige oder dreieckförmige Spitze 64 vorhanden. Der Winkel 62 ist derart vorgegeben, daß der Dichtring 2 auch in solchen Sicken zum Einsatz gelangen kann, welche aufgrund der besonderen Herstellverfahren schräg stehende Seitenwände aufweisen. Die radial innen liegenden Spitzen sowohl der zentralen Dichtlippe 10 als auch der axial beabstandet zu dieser angeordneten beiden zusätzlichen Lippen 12, 14 sind mit einem Radius versehen und abgerundet. Dies ist zweckmäßig um einerseits eine große Dicht- und Anlagefläche an dem einzuführenden Spitzende zu erhalten und um andererseits bei Bedarf das Spitzende mit geringem Aufwand wieder demontieren zu können. Desweiteren ergeben sich durch die abgerundete Ausbildung der drei Spitzen der genannten Lippen Vorteile bei der Fertigung, zumal auch Toleranzen gut ausgeglichen werden können.

### Bezugszeichenliste

- 2: Dichtring
- 4: Symmetrieebene
- 6: Sicke
- 8: Außendurchmesser
- 10: zentrale Dichtlippe
- 12, 14: Abstreiflippe
- 13, 15: Innenfläche
- 16, 18: Zwischenraum
- 20: Boden
- 22: Außenfläche
- 24: Abstand
- 26: Höhe von 10
- 30: Linie, maximale Toleranz
- 32: Linie, minimale Toleranz
- 34: Höhe von 12, 14
- 35: Gesamtdicke von 12, 14
- 36: Pfeil
- 37: Gesamtdicke von 10
- 38: Vorderfläche von 12
- 40: Radialebene
- 42, 44: Winkel
- 46: Vorderfläche von 10
- 48: Ausnehmung
- 50: Wulst
- 52: Basisbreite von 10
- 54: Basisbreite von 12, 14
- 56: Breite
- 57: Mittelebene
- 58: Gesamtbreite von 2
- 59: Abstand
- 60: Stirnfläche
- 62: Winkel
- 64: Spitze

## Patentansprüche

1. Dichtring (2), welcher in eine Sicke (6) einer Muffe eines insbesondere aus Kunststoff bestehenden Rohres oder Fittings einsetzbar ist, mit einer zentralen Dichtlippe (10), welche am Spitzende eines in die Muffe einschiebbaren Rohres dichtend anliegt, mit zwei zusätzlichen Lippen (12, 14), welche in axialer Richtung beabstandet zu beiden Seiten der zentralen Dichtlippe (10) und symmetrisch zu dieser angeordnet sind, mit jeweils einem zwischen der zentralen Dichtlippe (10) und den zusätzlichen Lippen (12, 14) angeordneten Zwischenraum (16, 18) und ferner mit einer an der Innenwand der Sicke (6) zur Anlage bringbaren Außenfläche (22),
dadurch gekennzeichnet,
daß die zusätzlichen Lippen (12, 14) als Abstreiflippen ausgebildet sind und einen größeren Innendurchmesser als die zentrale Dichtlippe (10) aufweisen,
daß jeweils die Mittelebene (57) der zusätzlichen Lippen (12, 14) zu der durch die zentrale Dichtlippe (10) verlaufenden Symmetrieebene (4) einen Abstand (59) aufweist, welcher im wesentlichen gleich groß ist wie eine im Bereich des Bodens (20) des Zwischenraums (16, 18) gemessene Basisbreite (52) der zentralen Dichtlippe (10),
und daß der Boden (20) des Zwischenraumes (16, 18) zur Außenfläche (22) einen Abstand (24) aufweist, welcher im wesentlichen gleich groß ist wie die gleichfalls auf diesen Boden (20) bezogene Höhe (26) der zentralen Dichtlippe (10).

2. Dichtring nach Anspruch 1, dadurch gekennzeichnet, daß die Gesamtbreite (58) bezüglich der Gesamtdicke (37) der zentralen Dichtlippe (10) um einen vorgegebenen Faktor größer ist, welcher zwischen 1,1 und 1,3, zweckmäßig zwischen 1,15 bis 1,25 und im wesentlichen 1,2 groß ist.

3. Dichtring nach Anspruch 1 oder 2, dadurch gekennzeichnet, daß die Gesamtdicke (37) der zentralen Dichtlippe (10) gegenüber der jeweiligen Gesamtdicke (35) der zusätzlichen Lippen (12, 14) um einen vorgegebenen Faktor größer ist, der zwischen 1,1 bis 1,3, bevorzugt zwischen 1,15 bis 1,25 und im wesentlichen 1,2 groß ist.

4. Dichtring nach einem der Ansprüche 1 bis 3, dadurch gekennzeichnet, daß die auf den Boden (20) des Zwischenraums (16, 18) bezogene Höhe (34) der zusätzlichen Lippen (12, 14) wesentlich kleiner ist als die vergleichbare Höhe (26) der zentralen Dichtlippe (10), wobei die Höhe (34) bevorzugt um einen Faktor zwischen 0,7 bis 0,8, zweckmäßig im wesentlichen 0,75, kleiner ist als die genannte Höhe (26) der Dichtlippe (10).

5. Dichtring nach einem der Ansprüche 1 bis 4, dadurch gekennzeichnet, daß die Vorderfläche (38) der zusätzlichen Lippe (12) bezüglich der Radialebene (40) in einem Winkel (42) geneigt angeordnet ist, welcher größer ist als der entsprechende Winkel (44) der Vorderfläche (46) der zentralen Dichtlippe (10), wobei der erstgenannte Winkel (42) zweckmäßig um einen Faktor zwischen 1,5 und 2,5, bevorzugt im wesentlichen 2, größer ist.

6. Dichtring nach einem der Ansprüche 1 bis 5, dadurch gekennzeichnet, daß die der Symmetrieebene (4) zugewandten Innenflächen (13, 15) der zusätzlichen Lippen (12, 14) im wesentlichen parallel zur Symmetrieebene (4) angeordnet sind.

7. Dichtring nach einem der Ansprüche 1 bis 6, dadurch gekennzeichnet, daß in der Außenfläche (22) eine Anzahl von ringförmigen Ausnehmungen (48) angeordnet sind, wobei bevorzugt vier Ausnehmungen (48) in gleichen Abständen angeordnet sind, und/oder daß im wesentlichen in der gleichen Radialebene wie der Boden (20) des Zwischenraumes (16, 18) axial zwischen den Ausnehmungen (48) je ein ringförmiger Wulst (50) vorhanden ist, wobei zweckmäßig insgesamt fünf derartige Wulste (50) in axialer Richtung gleichmäßig beabstandet im Bereich der Außenfläche (22) vorgesehen sind.

8. Dichtring nach einem der Ansprüche 1 bis 7, dadurch gekennzeichnet, daß die Dichtlippe (10) als ein gleichschenkliges Dreieck symmetrisch zur Symmetrieebene (4) angeordnet und radial nach innen ausgerichtet ist und/oder daß die Basisbreite (52) der Dichtlippe (10), und zwar gemessen im Bereich des Bodens (20) des Zwischenraumes (16, 18), im wesentlichen gleich groß ist, wie die entsprechende Basisbreite (54) der zusätzlichen Lippe (12, 14).

9. Dichtring nach einem der Ansprüche 1 bis 8, dadurch gekennzeichnet, daß der Abstand (59) der Mittelebene (57) der zusätzlichen Lippe (12, 14) zur Symmetrieebene (4) der Dichtlippe (10) im wesentlichen ein Viertel der Gesamtbreite (58) beträgt.

## Claims

1. Sealing ring (2) which can be inserted into a bead (6) of a socket of a pipe or fitting, especially a pipe or fitting composed of plastic, having a central sealing lip (10) which rests in sealing fashion against the spigot end of a pipe which can be introduced into the socket, having two additional lips (12, 14) which are arranged at an axial distance on each side of the central sealing lip (10) and symmetrically to the latter, having a respective interspace (16, 18) arranged between the central sealing lip (10) and the additional lips (12, 14) and furthermore having an outer surface (22) which can be brought to rest against the inner wall of the bead (6), characterised in that the additional lips (12, 14) are designed as scraper lips and have a larger inside diameter than the central sealing lip (10), in that the centre plane (57) of the additional lips (12, 14) is in each case at a distance (59) from the plane (4) of symmetry extending through the central sealing lip (10) which is essentially equal to a base width (52) of the central sealing lip (10) measured in the region of the bottom (20) of the interspace (16, 18), and in that the bottom (20) of the interspace (16, 18) is at a distance (24) from the outer surface (22) which is essentially equal to the height (26), likewise relative to this bottom (20), of the central sealing lip (10).

2. Sealing ring according to Claim 1, characterised in that, in relation to the total thickness (37) of the central sealing lip (10), the total width (58) is larger by a predetermined factor which is between 1.1 and 1.3, expediently between 1.15 and 1.25, and essentially 1.2.

3. Sealing ring according to Claim 1 or 2, characterised in that the total thickness (37) of the central sealing lip (10) is greater than the respective total thickness (35) of the additional lips (12, 14) by a predetermined factor which is between 1.1 and 1.3, preferably between 1.15 and 1.25, and essentially 1.2.

4. Sealing ring according to one of Claims 1 to 3, characterised in that the height (34) of the additional lips (12, 14) relative to the bottom (20) of the interspace (16, 18) is considerably smaller than the comparable height (26) of the central sealing lip (10), the height (34) being smaller, preferably by a factor between 0.7 and 0.8, expediently essentially 0.75, than the said height (26) of the sealing lip (10).

5. Sealing ring according to one of Claims 1 to 4, characterised in that the front face (38) of the additional lip (12) is arranged obliquely in relation to the radial plane (40) at an angle (42) which is larger than the corresponding angle (44) of the front face (46) of the central sealing lip (10), the former angle (42) expediently being larger by a factor between 1.5 and 2.5, preferably essentially 2.

6. Sealing ring according to one of Claims 1 to 5, characterised in that the inner surfaces (13, 15) of the additional lips (12, 14), which face the plane (4) of symmetry, are arranged essentially parallel to the plane (4) of symmetry.

7. Sealing ring according to one of Claims 1 to 6, characterised in that a number of annular recesses (48) are arranged in the outer surface (22), four recesses (48) at equal spacings preferably being arranged, and/or in that, axially between the recesses (48), there is in each case an annular bead (50) essentially in the same radial plane as the bottom (20) of the interspace (16, 18), there being expediently a total of five such beads (50), uniformly spaced in the axial direction, in the region of the outer surface (22).

8. Sealing ring according to one of Claims 1 to 7, characterised in that the sealing lip (10) is arranged symmetrically to the plane (4) of symmetry as an isosceles triangle and is directed radially inwards and/or in that the base width (52) of the sealing lip (10), measured in the region of the bottom (20) of the interspace (16, 18), is essentially equal to the corresponding base width (54) of the additional lip (12, 14).

9. Sealing lip according to one of Claims 1 to 8, characterised in that the distance (59) of the centre plane (57) of the additional lip (12, 14) from the plane (4) of symmetry of the sealing lip (10) is essentially one quarter of the total width (58).

## Revendications

1. Bague d'étanchéité (2) qui peut être logée dans une gorge (9) d'une emboîture d'un tube ou raccord, notamment composé de matière plastique, comprenant une lèvre d'étanchéité centrale (10) qui s'appuie à joint étanche contre une extrémité mâle, par exemple l'extrémité d'un tube qui peut s'emmancher dans l'emboîture, deux lèvres additionnelles (12, 14) qui sont disposées à un certain écartement des deux côtés de la lèvre d'étanchéité centrale (10) dans la direction axiale, et disposées symmétriquement par rapport à celle-ci, avec un espace intercalaire (16, 18) interposé entre la lèvre d'étanchéité centrale (10) et les lèvres additionnelles (12, 14) et, en outre, une surface extérieure (22) qui peut être mise en contact avec la paroi intérieure de la gorge (6), ***caractérisée en ce que*** les lèvres additionnelles (12, 14) constituent des lèvres racleuses et ont un plus grand diamètre intérieur que la lèvre d'étanchéité centrale (10),
***en ce que*** le plan médian (57) de chacune des lèvres additionnelles (12, 14) présente, par rapport au plan de symétrie (4) qui traverse la lèvre d'étanchéité centrale (10), une distance d'écartement (59) qui est sensiblement égale à une largeur de base (52) de la lèvre d'étanchéité centrale (10), mesurée dans la région du fond (20) de l'espace intercalaire (16, 18),
***et en ce que*** le fond (20) de l'espace intercalaire (16, 18) présente, par rapport à la surface extérieure (22), une distance d'écartement (24) qui est sensiblement égale à la hauteur (26) de la lèvre d'étanchéité centrale (10) mesurée également au-dessus de ce fond (20).

2. Bague d'étanchéité selon la Revendication 1, ***caractérisée en ce que*** la largeur totale (58) est supérieure à l'épaisseur totale (37) de la lèvre d'étanchéité centrale (10) d'un facteur prédéterminé qui est compris en 1,1 et 1,3, avantageusement entre 1,15 et 1,25 et sensiblement égal à 1,2.

3. Bague d'étanchéité selon la Revendication 1 ou 2, ***caractérisée en ce que*** l'épaisseur totale (37) de la lèvre d'étanchéité centrale (10) est supérieure à l'épaisseur totale (35) de chacune des lèvres additionnelles (12, 14) d'un facteur prédéterminé qui est compris entre 1,1 et 1,3, de préférence entre 1,15 et 1,25, et qui est sensiblement égal à 1,2.

4. Bague d'étanchéité selon une des Revendications 1 à 3, ***caractérisée en ce que*** la hauteur (34) des lèvres additionnelles (12, 14), mesurée au-dessus du fond (20) de l'espace intercalaire (16, 18), est sensiblement inférieure à la hauteur comparable (26) de la lèvre d'étanchéité centrale (10), la hauteur (34) étant inférieure, de préférence d'un facteur compris entre 0,7 à 0,8 et avantageusement sensiblement égal à 0,75, à la hauteur précitée (26) de la lèvre d'étanchéité (10).

5. Bague d'étanchéité selon une des Revendications 1 à 4, ***caractérisée en ce que*** la surface avant (38) de la lèvre additionnelle (12) est inclinée par rapport au plan radial (40) d'un angle (42) qui est plus grand que l'angle correspondant (44) de la surface avant (46) de la lèvre d'étanchéité centrale (10), l'angle (42) cité en premier étant avantageusement supérieur d'un facteur compris entre 1,5 et 2,5, de préférence sensiblement de 2.

6. Bague d'étanchéité selon une des Revendications 1 à 5, ***caractérisée en ce que*** les surfaces intérieures (13, 15) des lèvres additionnelles (12, 14) qui regardent vers le plan de symétrie (4) sont disposées sensiblement parallèlement au plan de symétrie (4).

7. Bague d'étanchéité selon une quelconque des Revendications 1 à 6, ***caractérisée en ce qu***'un certain nombre d'évidements annulaires (48) sont prévus dans la surface extérieure (22), quatre évidements (48) étant de préférence disposés à des distances d'écartement égales et/ou en ce qu'un bourrelet annulaire (50) est prévu sensiblement dans le même plan radial que le fond (20) de l'espace intercalaire (16, 18), axialement entre les évidements de chaque paire d'évidements (48), cependant qu'il est prévu avantageusement au total cinq bourrelets (50) de ce genre, espacés uniformément dans la direction axiale, dans la région de la surface extérieure (22).

8. Bague d'étanchéité selon une des Revendications 1 à 7, ***caractérisée en ce que*** la lèvre d'étanchéité (10) est disposée sous la forme d'un triangle isocèle, symétriquement par rapport au plan de symétrie (4) et est dirigée radialement vers l'intérieur, et/ou en ce que la largeur de base (52) de la lèvre d'étanchéité (10), mesurée dans la région du fond (20) de l'espace intercalaire (16, 18) est sensiblement égale à la largeur de base correspondante (54) de la lèvre additionnelle (12, 14).

9. Bague d'étanchéité selon une des Revendications 1 à 8, ***caractérisée en ce que*** la distance d'écartement (59) entre le plan médian (57) de la lèvre additionnelle (12, 14) et le plan de symétrie (4) de la lèvre d'étanchéité (10) est sensiblement le quart de la largeur totale (58).
